(19) Europäisches Patentamt

European Patent Office

Office européen des brevets

(11) **EP 3 029 580 B1**

(12) **EUROPEAN PATENT SPECIFICATION**

(45) Date of publication and mention
of the grant of the patent:
**10.04.2019 Bulletin 2019/15**

(21) Application number: **14831581.5**

(22) Date of filing: **30.07.2014**

(51) Int Cl.:
*G06F 13/16* (2006.01)    *G06F 12/00* (2006.01)
*G06F 12/0888* (2016.01)    *G06F 13/18* (2006.01)
*G06F 12/02* (2006.01)

(86) International application number:
**PCT/KR2014/007009**

(87) International publication number:
**WO 2015/016615 (05.02.2015 Gazette 2015/05)**

(54) **PROCESSOR AND MEMORY CONTROL METHOD**

PROZESSOR UND SPEICHERSTEUERUNGSVERFAHREN

PROCESSEUR ET PROCÉDÉ DE COMMANDE DE MÉMOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2013 KR 20130090273**

(43) Date of publication of application:
**08.06.2016 Bulletin 2016/23**

(73) Proprietor: **Samsung Electronics Co., Ltd.
Suwon-si, Gyeonggi-do 443-742 (KR)**

(72) Inventors:
• **KANG, Byoungik
Seoul 121-780 (KR)**
• **PARK, Jinyoung
Hwaseong-si
Gyeonggi-do 445-160 (KR)**
• **LEE, Seungwook
Seoul 121-892 (KR)**
• **HONG, Eunseok
Suwon-si
Gyeonggi-do 443-751 (KR)**

(74) Representative: **Gulde & Partner
Patent- und Rechtsanwaltskanzlei mbB
Wallstraße 58/59
10179 Berlin (DE)**

(56) References cited:
**KR-A- 20080 068 468    KR-A- 20090 075 324
KR-A- 20110 058 410    KR-A- 20120 046 258
US-A1- 2011 010 519    US-A1- 2011 010 519
US-A1- 2012 159 037**

EP 3 029 580 B1

## Description

### Technical Field

The present invention relates to a processor and a memory, and more specifically, to a switchable on-chip memory that a number of master Intellectual Properties (IPs) can access, and a method of controlling the on-chip memory.

### Background Art

In recent years, Application Processors (APs) have been widely employed in mobile devices, such as mobile phones, tablet Personal Computers (tablets), etc. A memory subsystem as one of the APs has continued to increase in importance.

AP may refer to a System on Chip (SoC) that is implemented in such a way that existing complex systems with a number of functions are integrated into a single chip as a single system.

Technologies for embodiment of SoCs have been researched. Particularly, a scheme for connecting various Intellectual Properties (IPs) embedded in a chip has been recognized as an important matter.

An SoC is generally configured to include a processor for controlling the entire system and a number of IPs controlled by the processor. The IP refers to circuits or logics, which can be integrated into an SoC, or a combination thereof. The circuits or logics are capable of storing codes. The IP may be classified into a slave IP configured to be only controlled by a processor; and a master IP configured to require data communication to other slave IPs. In certain examples, one IP may serve as both slave and master.

For example, an IP is capable of including a Central Processing Unit (CPU), a number of cores included in the CPU, a Multi-Format Codec (MFC), a video module, e.g., a camera interface, a Joint Photographic Experts Group (JPEG) processor, a video processor or a mixer, a Graphic(s) Processing Unit (GPU), a 3D graphics core, an audio system, drivers, a display driver, a Digital Signal Processor (DSP), a volatile memory device, a non-volatile memory device, a memory controller, a cache memory, etc.

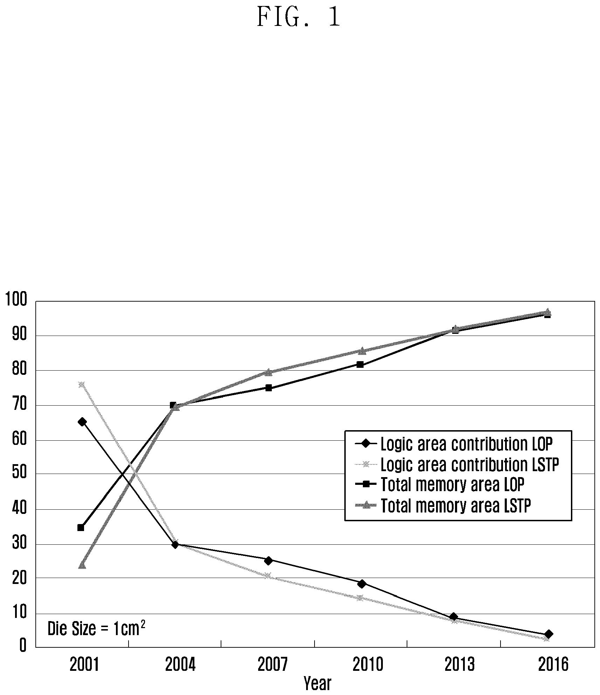

Fig. 1 is a graph showing the proportion between a logic area and a memory area in the SoC design.

Referring to Fig. 1, it is shown that the proportion between a logic area and a memory area is increasing. In particular, the area of a memory subsystem occupying in the embedded SoC is expected to increase up to approximately 70% in 2012 and 94% in 2014. Since memory subsystem is a factor to determine price, performance, power consumption of SoC, it must be considered when designing an embedded SoC and an on-chip memory.

US 2011/0010519 A1 discloses a method for memory management of a mobile multimedia processor, MMP, comprising a plurality of different processing units, e.g. a video processing core and a display controller. The MMP further comprises a cache and an on-chip memory that are separate from each other. According to this document, the on-chip memory shall be allocated based on a priority level of each of a plurality of memory requests and at least one dynamically settable global memory allocation priority threshold in order to prevent the cache from trashing or crashing.

### Disclosure of Invention

### Technical Problem

The present invention is devised to meet the requirements, and provides a method for various master Intellectual Properties (IPs) embedded in an SoC to use all the advantages of an on-chip buffer and an on-chip cache.

The present invention further provides a switchable on-chip memory that a number of master IPs can access.

It should be understood that the objectives of the present invention are not limited to those in the foregoing description, and the other objectives not described above will become more apparent from the following description.

### Solution to Problem

In accordance with an aspect of the present invention, a memory control method of an on-chip memory is provided as defined in the appended claims

In accordance with another aspect of the present invention, a processor is provided as defined in the appended claims

### Advantageous Effects of Invention

The on-chip memory and the processor with the memory, according to an embodiment of the present invention, enable various master IPs embedded in an SoC to use all the advantages of an on-chip buffer and an on-chip cache.

The embodiments of the present invention are capable of providing a switchable on-chip memory that a number of master IPs can access.

The embodiments can: set a memory area to a buffer or a cache according to use scenarios by master IPs; dynamically allocate portions of the memory area; and divide and use the memory in a unit of chunk, thereby dynamically using one part of the memory as a buffer and the other part as a cache.

The embodiments can take the form of memory areas designed to be used by individual master IPs as a single memory, and this reduces the silicon area and makes SoCs cost-competitive.

The embodiments can reduce a ratio of memory access latency to an off-chip memory to be small, and this reduces the amount of traffic accessing an off-chip memory.

The embodiments can apply power gates according to chunks to an on-chip memory, and reduce dynamic power consumption due to the reduction of access to an off-chip memory.

It should be understood that the features and advantages of the present invention are not limited to those in the foregoing description, and the other features and advantages not described above will become more apparent from the following description.

**Brief Description of Drawings**

Fig. 1 is a graph showing the proportion between a logic area and a memory area in the SoC design.

Fig. 2 is a schematic block diagram showing a general SoC.

Fig. 3 is a diagram showing the difference between a buffer and a cache memory in a memory address space.

Fig. 4 is a block diagram showing an example of a processor according to an embodiment of the present invention.

Figs. 5A and 5B are block diagrams showing another example of a processor according to an embodiment of the present invention.

Fig. 6 is a flow diagram showing a method of setting modes by master IPs according to an embodiment of the present invention.

Fig. 7 is a graph showing an amount of transaction according to access regions.

Fig. 8 is a diagram showing a correlation and operation time points between two master IPs according to an embodiment of the present invention.

Fig. 9 is a flow diagram a memory allocation process to master IPs according to an embodiment of the present invention.

Fig. 10 is a block diagram showing an on-chip memory according to an embodiment of the present invention.

Fig. 11 is a diagram showing transaction information according to master IPs and SFR information regarding an on-chip memory according to an embodiment of the present invention.

Fig. 12 is a diagram showing SFR allocation bits of an on-chip memory according to an embodiment of the present invention.

Fig. 13 is a flow diagram showing the initial setup process of an on-chip memory according to an embodiment of the present invention.

Fig. 14 is a flow diagram showing a method of analyzing transaction of master IPs according to an embodiment of the present invention.

Fig. 15 is a flow diagram showing a dynamic allocation process of a cache memory according to an embodiment of the present invention.

Fig. 16 is a diagram showing dynamic allocation information regarding a cache memory according to an embodiment of the present invention.

Figs. 17 and 18 are flow diagrams showing methods of controlling power according to chucks of a cache memory according to an embodiment of the present invention.

Fig. 19 is a diagram showing power control information regarding a cache memory according to an embodiment of the present invention.

**Mode for the Invention**

Detailed descriptions of well-known functions and structures incorporated herein may be omitted to avoid obscuring the subject matter of the present invention. Embodiments of the present invention are described in detail with reference to the accompanying drawings. The terms or words described in the description and the claims should not be limited by a general or lexical meaning, instead should be analyzed as a meaning and a concept through which the inventor defines and describes the invention at his most effort, to comply with the idea of the invention.

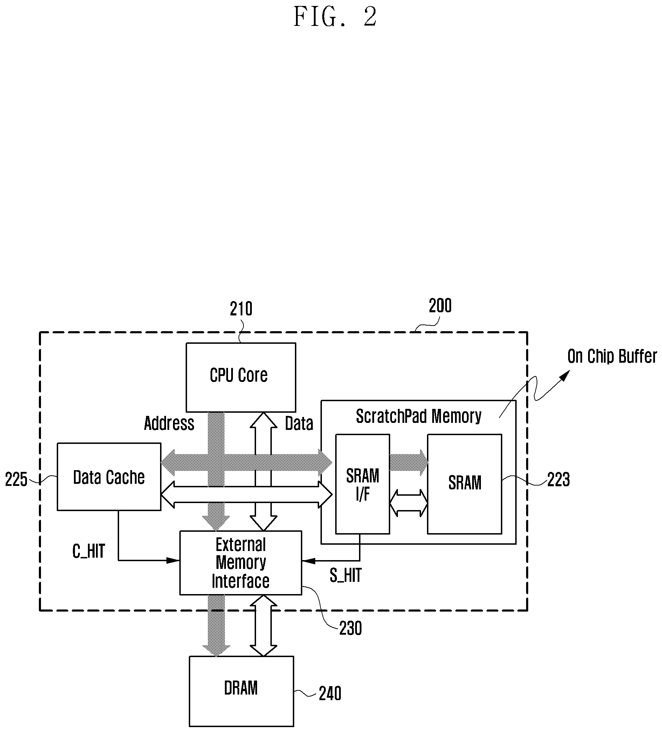

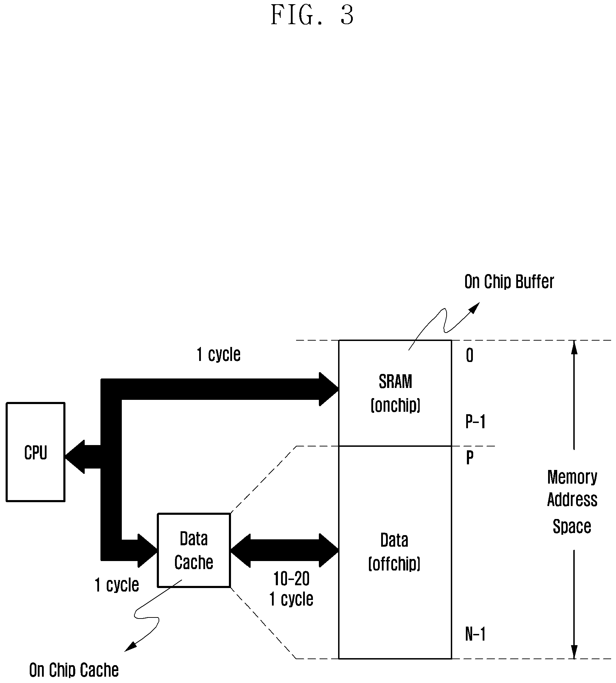

Fig. 2 is a schematic block diagram showing a general SoC. Fig. 3 is a diagram showing the difference between a buffer and a cache memory in a memory address space.

Referring to Fig. 2, a general embedded SoC 200 is capable of including a CPU core 210, an on-chip memory 220 (i.e., 223, 225), and an external memory interface 230. The on-chip memory 220 is located between the processor core 210 and an external memory 240 (or an off-chip memory). The on-chip memory 220 refers to a memory device that is capable of operating at a higher speed than the external memory 240 and smaller in size than the external memory 240. The on-chip memory 220 may be used as a buffer 223 or a cache 225 as shown in Fig. 2.

A buffer and a cache differ from each other in terms of memory address space, and the difference is described referring to Fig. 3. A buffer has a fixed memory access time using a fixed range of memory space. In contrast, a cache is capable of covering a memory space larger than a cache memory size. The memory access time of a cache may vary according to Cache Hit/Miss.

The on-chip buffer (or memory) and the on-chip cache may have advantages and disadvantages in the following table 1. That is, the on-chip buffer occupies a small area, consumes small power on the SoC, and has a fixed memory access time. However, the on-chip buffer has a smaller address region than the on-chip cache because the covering address region is fixed due to the buffer size. The on-chip buffer has less convenience in use than the on-chip cache because the on-chip buffer needs the support of software when being used. Therefore, it is preferable to use an on-chip buffer in terms of power consumption and an area of SoC and a memory access time. Meanwhile, it is preferable to use an on-chip cache in terms of the determination of a range of dynamic address and an address region to be covered, and the use convenience.

[Table 1]

| | On Chip Buffer | On Chip Cache |
|---|---|---|
| Silicon area | Small | Large |
| Power consumption | Small | Large |
| Access time | Fixed | Subject to compulsory, capacity, and conflict misses |
| Coverage (address region) | Small (equal to the size of buffer) | Large (larger than the size of cache) |
| Decision (address region) | Static | Dynamic (retrieving the missed data from main memory) |
| Usage | Hard to use (S/W support is necessary for memory alloc) | Easy to use |

Requirements (buffer or cache) by master IPs embedded in an SoC may differ from each other. In order to meet all the requirements in an SoC, when all the buffers or caches for individual master IPs are implemented in the SoC, the silicon area increases and this may thus increase the price of SoC.

In addition, various master IPs embedded in an SoC need a method of using all the advantages of the on-chip buffer and on-chip cache. In this case, since the frequency that all the master IPs are simultaneously operating is low, one on-chip memory may be used as the space is alternated to a buffer and a cache. Therefore, the present invention provides a switchable on-chip memory that a number of master IPs can access.

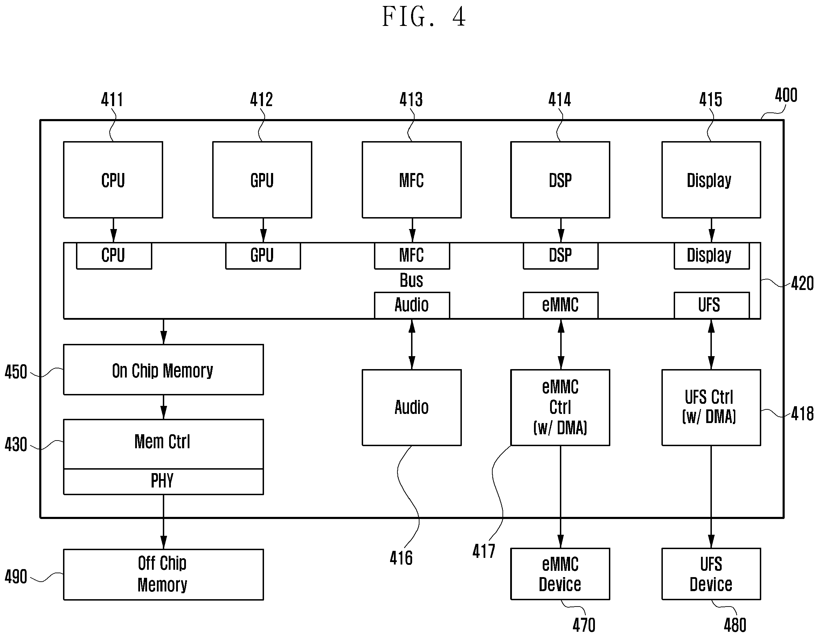

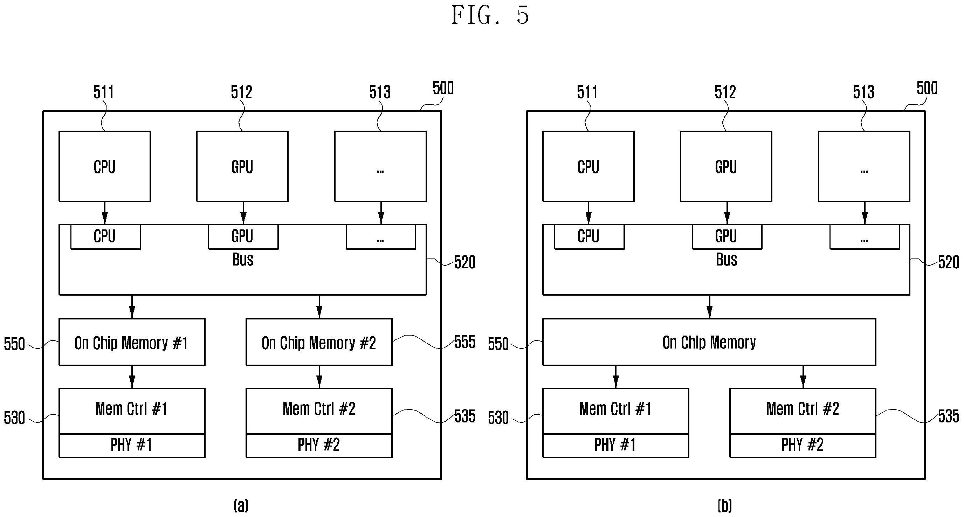

Fig. 4 is a block diagram showing an example of a processor according to an embodiment of the present invention. Figs. 5A and 5B are block diagrams showing another example of a processor according to an embodiment of the present invention.

Referring to Fig. 4, the processor 400 according to an embodiment of the present invention is capable of including an on-chip memory 450, a memory controller 430, master IPs 411, 412, 413, 414, 415, 416, 417, and 418, a Bus 420, etc. In the embodiment, the processor 400 may be an Application Processor (AP).

As shown in Fig. 4, the processor 400 is capable of including various master IPs on a System on Chip (SoC). For example, the master IPs are capable of including a Central Processing Unit (CPU) 411, a Graphic(s) Processing Unit (GPU) 412, a Multi Format Codec (MFC) 413, a Digital Signal Processor (DSP) 414, a Display 415, an Audio 416, an embedded Multi Media Card (eMMC) controller 417, a Universal Flash Storage (UFS) controller 418, etc., but are not limited thereto. Operations of the individual master IPs are not described in detail in the following description to avoid obscuring the subject matter of the present invention.

The on-chip memory 450 allows access of a number of master IPs 411, 412, 413, 414, 415, 416, 417, and 418. The on-chip memory 450 may be a switchable on-chip memory that can be used at it is alternated to a buffer or a cache according to master IPs 411, 412, 413, 414, 415, 416, 417, and 418. The detailed description will be described later.

Although the embodiment shown in Fig. 4 is configured in such a way that the processor includes one on-chip memory 450, it should be understood that the processor may be configured in various forms. For example, as shown in Fig. 5A, the processor 500 may be configured to a number of on-chip memories 550 and 555. As shown in Fig. 5B, the embodiment may be modified in such a way that one on-chip memory 550 connects to a number of memory controllers 530 and 535, but is not limited thereto.

Although the embodiment shown in Fig. 4 is configured in such a way that the on-chip memory 450 is located at a specified area in the processor 400, it should be understood that the present invention is not limited to the embodiment. For example, although it is not shown, the embodiment may be modified in such a way that the on-chip memory 450 may be implemented in various locations, such as the bus 420, the memory controller 430, etc.

In the foregoing description, the processor according to an embodiment of the present invention is explained in terms of configuration.

The following description is provided regarding operations of a switchable on-chip memory included in the processor according to an embodiment of the present invention.

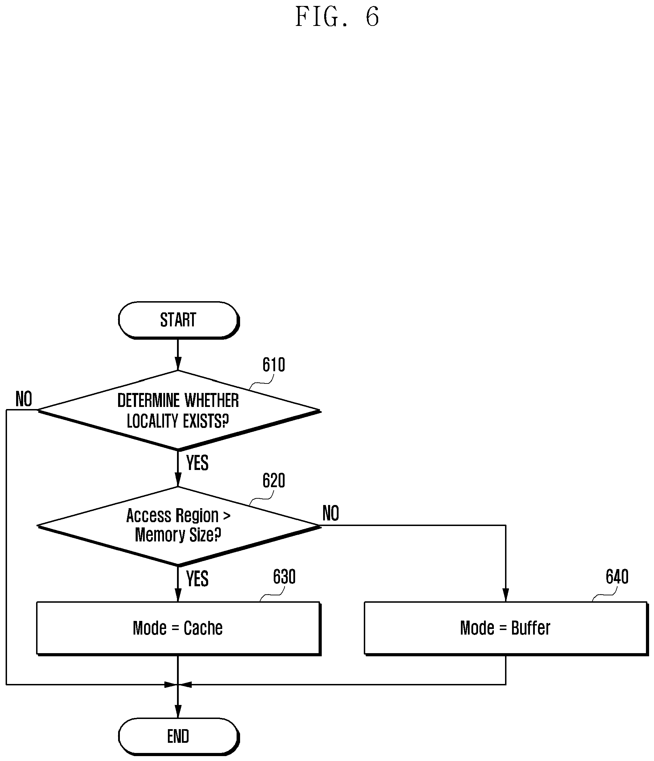

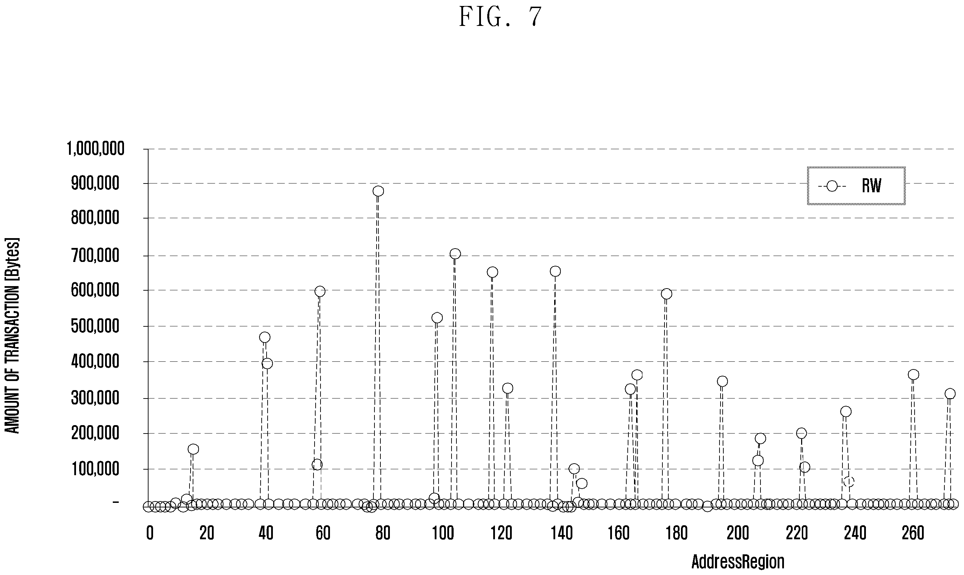

Fig. 6 is a flow diagram showing a method of setting modes by master IPs according to an embodiment of the present invention. Fig. 7 is a graph showing an amount of transaction according to access regions.

Referring to Fig. 6, a determination is made as to whether the locality of a master IP exists in operation 610. Locality is a pattern referring to a storage device by a running program, which is not a property that occurs all over the entire area of the storage device, but a property that intensively accesses one or two location of the storage device at a certain moment. That is, locality is a pattern of intensive reference to a particular area of a memory at a certain moment.

Referring to Fig. 7, an amount of transaction according to access regions of a particular master IP is shown. When an amount of transaction is greater than a preset value, it is determined that the locality exists. For example, when an amount of transaction is greater than 600,000 bytes, a setting may be preset as the locality exists.

Referring back to Fig. 6, when it is ascertained that the locality of a master IP exists in operation 610, the pattern of memory access regions of a master IP is analyzed and a mode of an on-chip memory is determined in operation 620. The mode of an on-chip memory refers to a mode where the on-chip memory is set as a buffer or a cache.

When a memory access region of a master IP is greater than a memory size in operation 620, the mode of an on-chip memory is set as a cache in operation 630. Since the result that a memory access region is greater than a memory size indicates that an IP is needed to cover a region greater than the memory size, it is advantageous that the on-chip memory is used as a cache. On the other hand, when a memory access region of a master IP is less than a memory size in operation 620, the mode of an on-chip memory is set as a buffer in operation 640.

The following table 2 shows an example setting a mode of an on-chip memory based on access regions and locality by master IPs. The setup values may vary according to system operation.

[Table 2]

| Master IP | Locality | Region | Buffer or Cache |
|---|---|---|---|
| GPU | Texture | Region > Size | Cache |
| MFC | Line Buffer | Region > Size | Cache |
| DMA | Page Cache | Region > Size | Cache |
| DSP | | Region < Size | Buffer |
| Audio | | Region < Size | Buffer |

In the foregoing description, a method of setting a mode of an on-chip memory according to master IPs is explained.

The following description is provided regarding a process of setting priority according to master IPs.

According to embodiments, in order to allocate an on-chip memory according to master IPs and to use the allocated spaces, the master IPs may be prioritized. As the priority of the master IPs is set, memory allocation is made starting from the master IP with the highest priority.

The master IPs may be prioritized in such a way that a real time IP, for example, is set to have a higher priority. When a graphic operation process delays, a screen blinking or a screen switching delay may occur on the display, and this inconveniences the user. Therefore, the GPU may be an IP that needs to perform operations in real-time. However, when a graphic operation process is not important according to the operation of a system, the GPU may be set to a non-real-time IP.

In an embodiment, the higher the throughput of a master IP the higher the priority of a master IP is set. That is, the higher the throughput of a master IP the more advantageous the area of an on-chip memory is used in terms of the process speed of the entire system. Therefore, a master IP with a high throughput may be set to have a high priority.

The priory values according to master IPs may vary depending on the operation of the system. It should be understood that the method of setting the priority of master IPs is not limited to the embodiment. For example, the priority according to master IPs may be set in order of GPU>MFC>DMA>DSP>Audio. Meanwhile, the higher the priority the smaller the priority value is set to be.

In the foregoing description, a process of setting priorities according to master IPs is explained.

The following description is provided regarding a process of setting the size of a memory space required according to master IPs.

According to embodiments, the size of a memory space required according to master IPs may be set. For example, when an on-chip memory according to a selected master IP is set to a buffer mode, the size of a memory space may be determined based on the access region. That is, a required size of memory space may be set to meet the size of an access region.

According to embodiments, when an on-chip memory according to a master IP is set to a cache mode, the size of a memory space may be determined based on the variation of a hit ratio. That is, a required size of a memory space may be set to a point at which a hit ratio according to the required size of a memory space is greater than or equal to a preset threshold. The hit ratio refers to a ratio of a number of accesses that a corresponding master IP makes to an on-chip memory to the overall number of accesses that the master IP makes to an external memory (an off-chip memory) to read data and commands required to execute a program and instructions, and thereby to results in the same effect. When the preset threshold is set to a relatively large value, the corresponding master IP may execute processes fast; however, the required size of a memory space in the on-chip memory may increase. When the preset threshold is set to be too small, the corresponding master IP may read required data and commands from a cache memory at a low efficiency. Therefore, as the hit ratio is set to be greater than or equal to a preset threshold according to conditions, a required size of a memory space can be set to be proper, thereby achieving efficient memory management. According to embodiments, the preset threshold may be set according to a user's inputs.

The following table 3 shows an example of a memory size required according to master IPs. The setup values may vary according to system operation.

[Table 3]

| Master IP | Required Size |
| --- | --- |
| GPU | 4MB |
| MFC | 2MB |
| DMA | 3MB |
| DSP | 1MB |
| Audio | 4MB |

In the foregoing description, a process of setting the size of a memory space required according to master IPs is explained.

The following description is provided regarding a process of setting a correlation between master IPs.

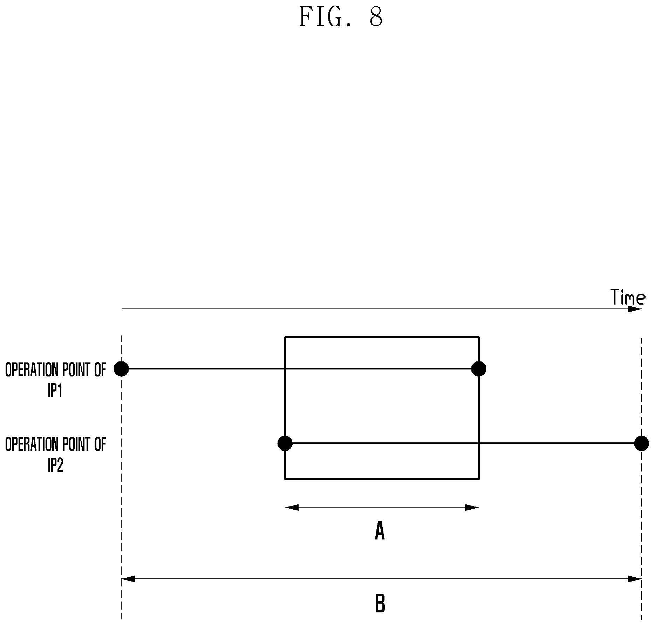

Fig. 8 is a diagram showing a correlation and operation time points between two master IPs according to an embodiment of the present invention.

Referring to Fig. 8, master IPs that differ from each other may have individual operation times which are overlapping in part. That is, when one master IP, IP1, starts to the operation and maintains the operation, another master IP, IP2, may start to the operation before the IP1 stops the operation. When operation times of two different master IPs overlap with each other, this is called a correlation between two master IPs exists. In this case, when the operation time that the two different master IPs simultaneously operate is relatively large, the correlation value is deemed to be large.

For example, as described in the following Equation 1, the correlation value can be calculated from a ratio of a time that two master IPs are simultaneously operating to the overall time that two master IPs have operated from start to end. It should be understood that the correlation value is not limited to the calculation. For example, the correlation value may also be calculated based on a ratio of a time that two master IPs are simultaneously operating to a time that one of the master IPs is operating.

[Equation 1]

$$r_{IP1,IP2} = A/B$$

Wherein: $r_{IP1,\,IP2}$ denotes a correlation value between two master IPs, IP1 and IP2; B denotes the overall time that IP1 and IP2 are operating; and A denotes a time that IP1 and IP2 are simultaneously operating.

When the correlation value is greater than a preset threshold, the correlation is considered high. According to embodiments, the preset threshold may be set according to a user's inputs.

The following table 4 shows an example of a correlation between master IPs. The correlation may vary according to system operation.

[Table 4]

|        | GPU | MFC | DMA | DSP | Audio |
|--------|-----|-----|-----|-----|-------|
| GPU    |     | L   | L   | L   | L     |
| MFC    |     |     | H   | L   | L     |
| DMA    |     |     |     | L   | L     |
| DSP    |     |     |     |     | L     |
| Audio  |     |     |     |     |       |

In the foregoing description, a process of setting a correlation between master IPs is explained.

The following description is provided regarding a process of allocating memory according to master IPs.

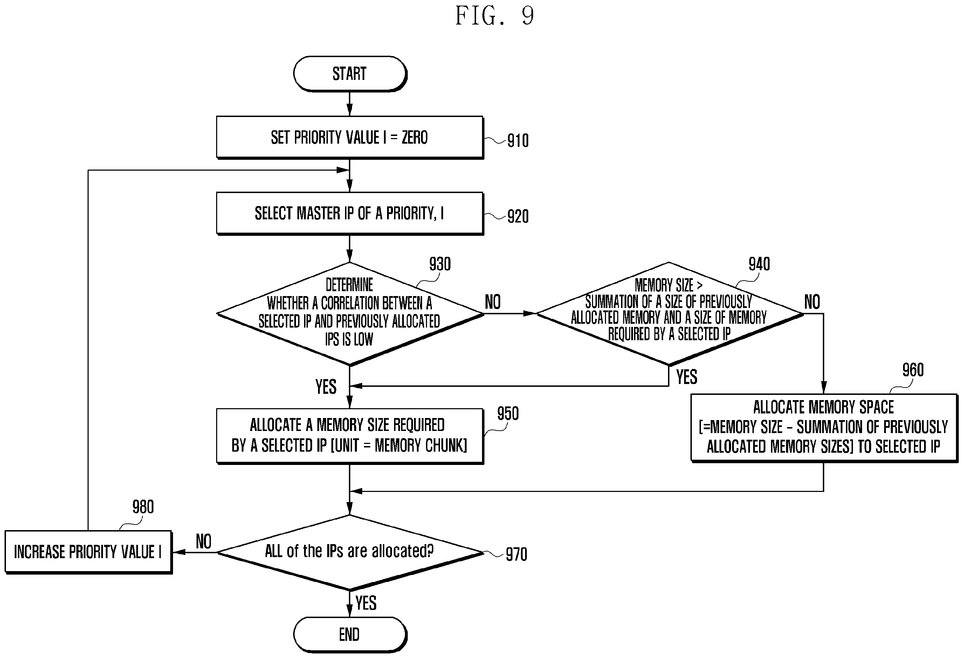

Fig. 9 is a flow diagram a memory allocation process to master IPs according to an embodiment of the present invention.

Memory allocation according to master IPs may be performed based on the priority of the master IPs, a required size of a memory space, and a correlation with other master IP, described above.

Referring to Fig. 9, the memory controller is capable of selecting a master IP with the highest priority in operation 910. For example, when the priority value is set such that the higher the priority, the smaller the value, the priority value i may be set to zero. The memory controller is capable of searching for and selecting a master IP of which the priority value i is zero in operation 920. That is, the memory controller is capable of setting allocation of memory starting from a master IP with a high priority.

The memory controller is capable of determining whether a currently selected master IP is correlated with master IPs that have been selected in operation 930. That is, when there has been a master IP that was selected and allocated a memory before the currently selected master, the memory controller is capable of determining whether there is a correlation between the currently selected IP and the previously allocated IPs. When the correlation value is greater than a preset threshold, the correlation is considered high. The preset threshold may vary according to management types of system. The preset threshold may be set to a certain value according to a user's input. When the memory controller ascertains that a correlation between the currently selected master IP and the previously selected master IPs is low in operation 930, it proceeds with the following operation 950. In another embodiment, when any master IP has not been allocated before the current master IP is selected, the memory controller ascertains that the correlation does not exist or is low between the currently selected master IP and the previously selected master IPs in operation 930, it proceeds with the following operation 950.

When the memory controller ascertains that the correlation is low between the currently selected master IP and the previously selected master IPs in operation 930, it is capable of memory allocation according to a memory space size required by the currently selected master IP in operation 950. According to embodiments, the memory may be allocated in a unit of chunk as a memory size. The unit of chunk may vary according to processes or embodiments.

On the other hand, when the memory controller ascertains that the correlation is high between the currently selected master IP and the previously selected master IPs in operation 930, it is capable of memory allocation considering the size of an on-chip memory in operation 940.

That is, the memory controller is capable of determining whether the size of an on-chip memory is sufficient to allocate a memory space size required by the currently selected master IP in operation 940. According to embodiments, as descried in the following Equation 2, the memory controller may compare the summation of a memory space size, allocated to the previously selected master IPs, and a memory space size, required by the currently selected master IP, with the size of an on-chip memory in operation 940.

[Equation 2]

$$\sum_{i} A_i < S$$

Wherein i represents the index of IPs with a high correlation value; A; is an allocated memory size with the index i; and S represents the overall size of an on-chip memory.

When the summation of a memory space size, required by the currently selected master IP, and memory space sizes, allocated to the master IPs selected previously before the currently selected master IP, is less than the overall size of an on-chip memory, the memory controller is capable of memory allocation according to a memory space size required by the currently selected master IP. That is, the memory controller is capable of memory allocation according to a memory space size required by the currently selected master IP in operation 950. According to embodiments, the memory may be allocated in a unit of chunk as a memory size.

On the other hand, when the summation of a memory space size, required by the currently selected master IP, and memory space sizes, allocated to the master IPs selected previously before the currently selected master IP, is greater than the overall size of an on-chip memory, the memory controller cannot allocate memory according to a memory space size required by the currently selected master IP. In this case, the memory controller may allocate a memory space, obtained by subtracting a currently allocated memory size from the size of an on-chip memory, to the currently selected master IP in operation 960.

After memory allocation in operation 950 or 960, the memory controller is determining whether memory allocation is made to all the IPs in operation 970. When the memory controller ascertains that memory allocation is not made to all the IPs in operation 970, it increases the priority value i by one in operation 980 and then performs memory allocation for a master IP with the next priority value.

Therefore, the on-chip memory is divided in a unit of chuck according to individual master IPs, dynamically allocating one part of the memory to a buffer and the other part to a cache.

The following table 5 describes an example of memory allocation according to master IPs. The setup values may vary according to system operation.

[Table 5]

| Master IP | Priority | Required Size | Allocation | Note |
|---|---|---|---|---|
| GPU | 1 | 4MB | 4MB | |
| MFC | 2 | 2MB | 2MB | |
| DMA | 3 | 3MB | 2MB | $r_{DMA,MFC}$ = high |
| DSP | 4 | 1MB | 1MB | |
| Audio | 5 | 4MB | 4MB | $r_{Audio, Others}$ = low |

Although it is not shown, when the correlation, memory space size, priority and mode according to master IPs are set, the setting order and the setting combination may be altered in various forms. The memory allocation process may also be modified.

In the foregoing description, a process for allocating memory according to master IPs is explained.

The following description is provided regarding the architecture of a switchable on-chip memory included in the processor according to an embodiment of the present invention.

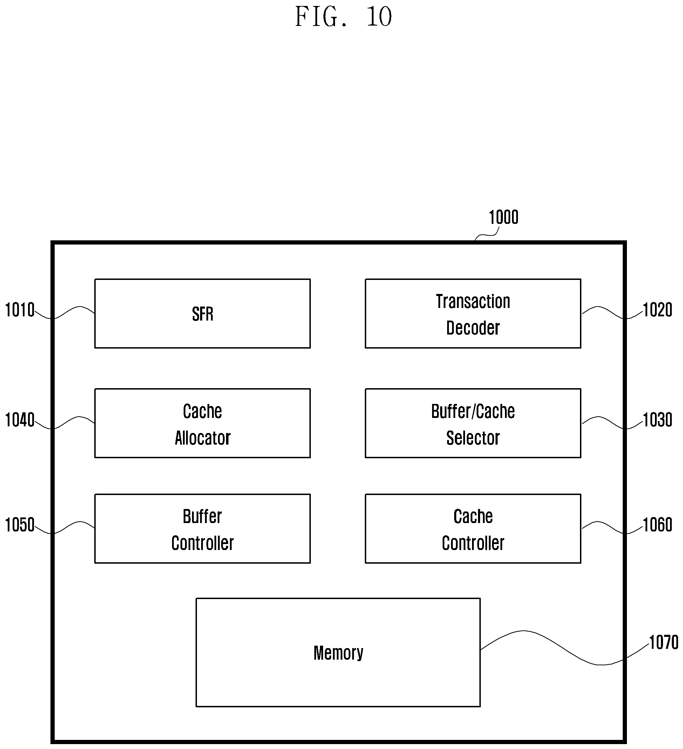

Fig. 10 is a block diagram showing an on-chip memory according to an embodiment of the present invention.

Referring to Fig. 10, the on-chip memory 1000 according to an embodiment of the present invention is capable of including a Special Function Register (SFR) 1010, a Transaction Decoder 1020, a Buffer/Cache selector 1030, a Cache allocator 1040, a Buffer Controller 1050, a Cache Controller 1060, a memory space 1070, etc.

The SFR 1010 is a special function register area and controls and monitors various functions of the processor. According to the architecture of the processor, the SFR 1010 is capable of including an I/O and peripheral device controller, a timer, a stack pointer, a stack limit, a program counter, a subroutine return address, a processor status, condition codes, etc., but not limited thereto. In the embodiment, the SFR 1010 is capable of including memory allocation information regarding the on-chip memory to individual master IPs. The detailed description will be explained later.

The transaction decoder 1020 analyzes and decodes transaction information from master IPs. The memory space 1070 refers to a space of the on-chip memory 1000, which is actually used for storage.

The buffer/cache selector 1030 sets the on-chip memory 1000 as a buffer or a cache according to the setup of the SFR 1010. The cache allocator 1040 dynamically allocates a region allocated to a cache in the memory 1000. The cache controller 1060 controls the region allocated to a cache. Although the embodiment of Fig. 10 is configured in such a way that the cache allocator 1040 and the cache controller 1060 are separated, it may be modified in such a way that cache allocator 1040 and the cache controller 1060 are configured into one component. The buffer controller 1050 controls a region allocated to a buffer in the memory 1000. Although it is not shown, the buffer controller 1050 and the cache controller 1060 may be configured into one component.

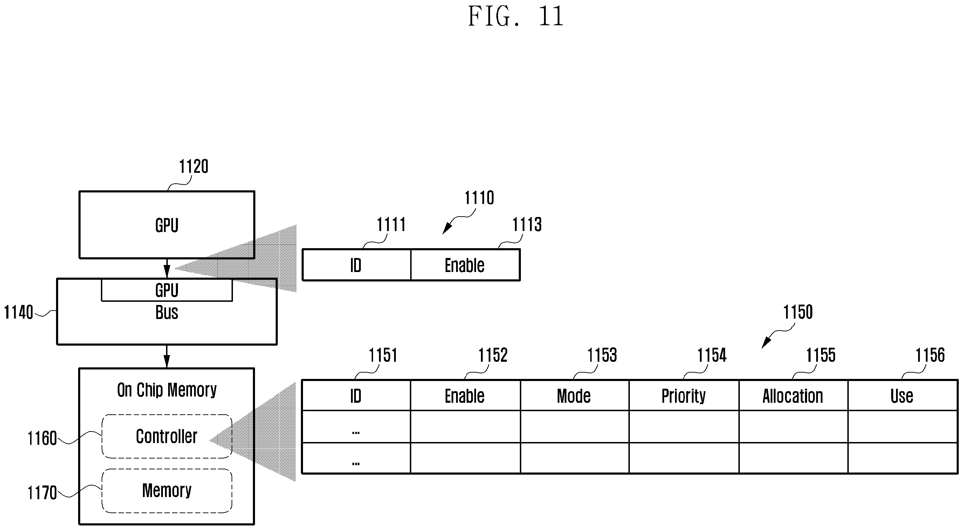

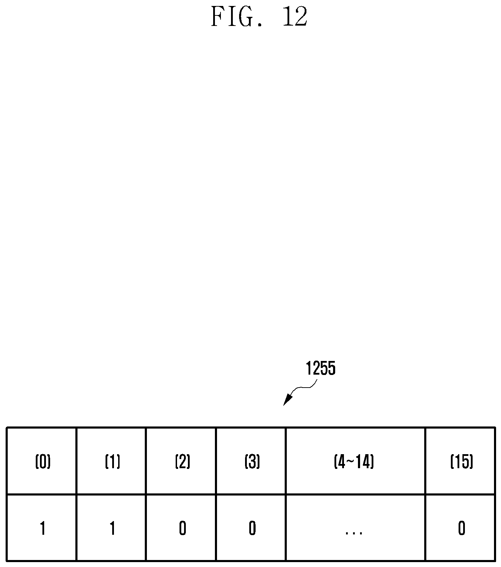

Fig. 11 is a diagram showing transaction information according to master IPs and SFR information regarding an on-chip memory according to an embodiment of the present invention. Fig. 12 is a diagram showing SFR allocation bits of an on-chip memory according to an embodiment of the present invention.

Referring to Fig. 11, transaction information 1110 regarding a master IP may include identification information (ID) 1111 regarding a corresponding master IP, enable information 1113, etc., but is not limited thereto. The master IP is capable of transmitting the transaction information 1110 to the on-chip memory via a bus 1140. In the on-chip memory, a transaction decoder decodes the received transaction information and transfers the decoded result to a memory controller 1160. The master IP's identification information 1111 and enable may be identifiers (identifications) indicating respective states.

The SFR information 1150 of the on-chip memory may include a master IP's identification information 1151, enable information 1152, mode information 1153, priority information 1154, allocation information 1155, actual memory use information 1156, etc., but is not limited thereto. The master IP's identification information 1151 needs to be identical to the master IP's identification information 1111 included in the transaction information regarding a master IP. The enable information 1152 indicates a condition as to whether a memory allocated to a corresponding master IP is enabled.

The allocation information 1155 indicates a condition as to whether memory chunks are allocated via individual bits of the on-chip memory. The actual memory use information 1156 indicates a condition as to whether a corresponding memory chunk is actually in use. For example, as shown in Fig. 12, the memory allocation information 1155 allocates '0' and '1' to memory chunks to indicate whether they are in use.

The mode information 1153 indicates a condition as to whether an IP corresponding to the master IP's identification information 1151 is set to a buffer mode or a cache mode. The priority information 1154 includes priority information regarding a corresponding IP.

The foregoing description explained the architecture of a switchable on-chip memory included in the processor according to an embodiment of the present invention.

The following description is provided regarding operations of a switchable on-chip memory included in the processor according to an embodiment of the present invention.

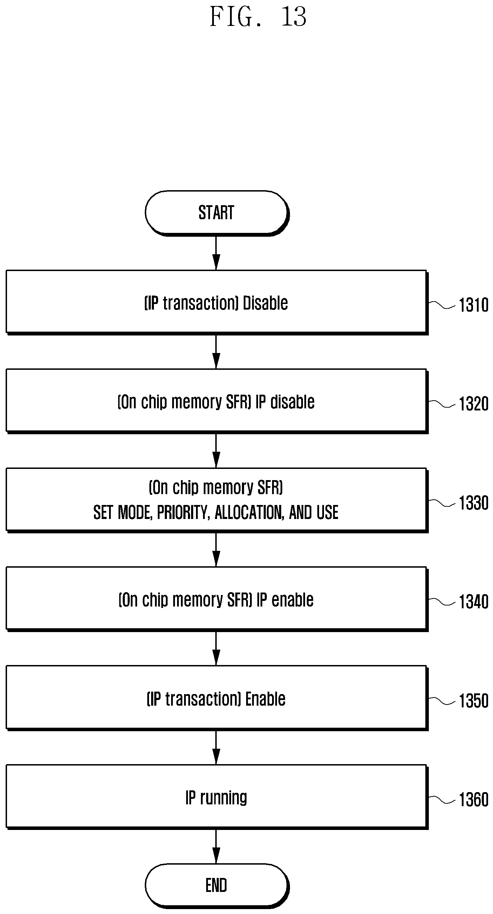

Fig. 13 is a flow diagram showing the initial setup process of an on-chip memory according to an embodiment of the present invention.

Referring to Fig. 13, an on-chip memory is used after transaction information regarding a master IP is set and then information regarding an SFR of the on-chip memory corresponding to the transaction information is set.

To do this, a master IP's transaction is disabled in operation 1310. After that, the SFR corresponding to the master IP of the on-chip memory is disabled in operation 1320.

In operation 1330, a mode, a priority, allocation information, actual memory use information, etc. is set in the SFR of the on-chip memory. After that, the SFR of the on-chip memory is enabled in operation 1340. Transaction of the master IP is enabled in operation 1350. The master IP is running in operation 1360.

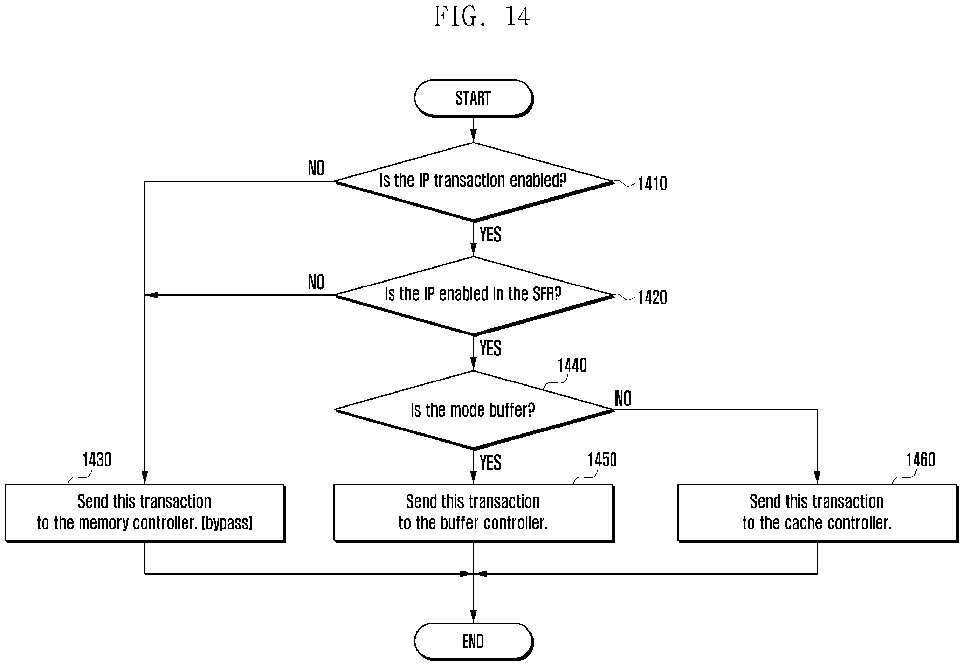

Fig. 14 is a flow diagram showing a method of analyzing transaction of master IPs according to an embodiment of the present invention.

Referring to Fig. 14, a transaction of a corresponding master IP may be transmitted to a buffer or a cache or bypassed via an off-chip memory controller, by enabling transaction information, SFR information and mode.

More specifically, a determination is made as to whether the enable information of the master IP transaction is enabled in operation 1410. When the master IP transaction information is enabled in operation 1410, a determination is made as to whether the IP enable information in the SFR information is enabled in operation 1420.

On the other hand, when the enable information of the master IP transaction is disabled in operation 1410 or the IP enable information in the SFR information is disabled in operation 1420, the transaction of a corresponding master IP is transmitted to an off-chip memory controller in operation 1430. That is, the transaction of a corresponding master IP is bypassed via an off-chip memory controller, not transmitted to an on-chip memory.

When the IP enable information in the SFR information is enabled in operation 1420, a determination is made as to whether the mode information in the SFR information is a buffer or a cache in operation 1440. When the SFR mode is a buffer mode in operation 1440, the transaction of the master IP is transmitted to a buffer controller in the on-chip memory in operation 1450. On the other hand, when the SFR mode is a cache mode in operation 1440, the transaction of the master IP is transmitted to a cache controller in the on-chip memory in operation 1460. The embodiment may also be modified in such a way that one of the controllers in the on-chip memory performs processes corresponding to a mode set in the SFR information.

The foregoing description explained operations of a switchable on-chip memory included in the processor according to an embodiment of the present invention.

The following description is provided regarding a process of switching modes in a switchable on-chip memory included in the processor according to an embodiment of the present invention.

In the switchable on-chip memory according to an embodiment of the present invention, a memory area, allocated to and in use as a buffer or a cache, may be disabled or a memory area, which is in the process of allocation by another master IP with a higher priority, may switch from the current mode to another mode.

In a state where the on-chip memory is allocated to and in use as a buffer, when the buffer is disabled or the buffer mode is switched to a cache mode, the buffer controller of the on-chip memory may copy the chunk area in use onto an off-chip memory.

In a state where the on-chip memory is allocated to and in use as a cache, when the cache is disabled or the cache mode is switched to a buffer mode, the cache controller of the on-chip memory may clean and invalidate the chunk area in use.

The foregoing description explained a process of switching modes in a switchable on-chip memory included in the processor according to an embodiment of the present invention.

The following description is provided regarding a cache operation method of a switchable on-chip memory included in the processor according to an embodiment of the present invention.

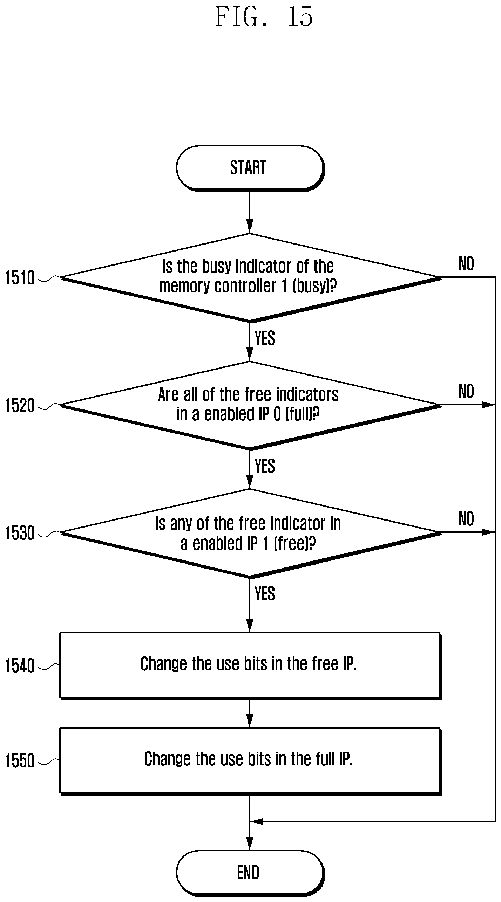

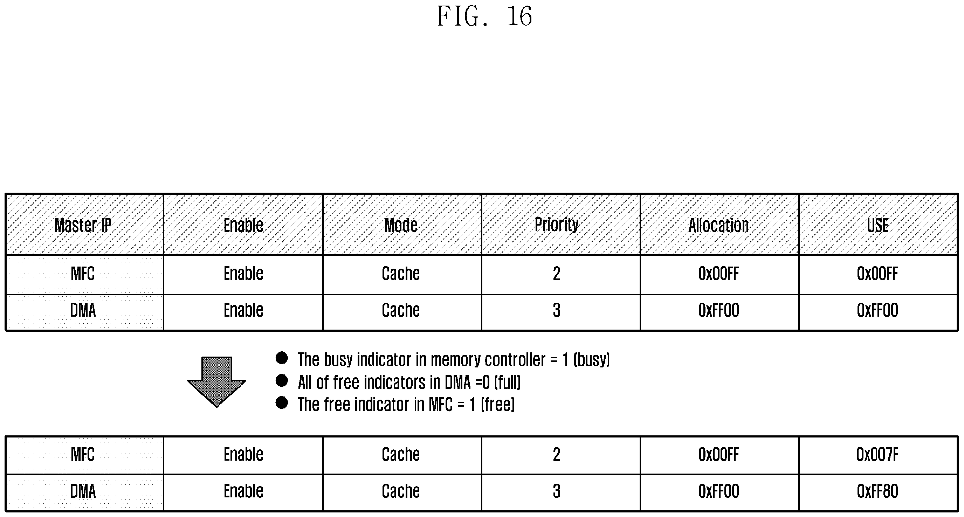

Fig. 15 is a flow diagram showing a dynamic allocation process of a cache memory according to an embodiment of the present invention. Fig. 16 is a diagram showing dynamic allocation information regarding a cache memory according to an embodiment of the present invention.

Referring to Fig. 15, in a switchable on-chip memory according to an embodiment of the present invention, a cache memory is dynamically allocated in a unit of chunk (or Way). Dynamic allocation of a cache memory may be made based on a free indicator by chunks of a cache memory and a busy indicator of a memory controller.

The free indicator refers to an indicator that may check dynamic allocation via status bits according to lines of a cache memory and that indicates whether an area, not in use, exists in an allocated cache memory. For example, the free indicator may be implemented with a one-bit indicator, indicating '1' (representing 'free') when an area, actually not in use, exists in a cache memory, or '0' (representing 'full') when an area, actually not in use, does not exist in a cache memory. It should, however, be understood that the free indicator is not limited to the embodiment. That is, it should be understood that the determination as to whether or not an area, actually not in use, exists in a cache memory may be made by employing other methods.

The busy indicator refers to an indicator indicating whether a usage of on-chip memory is greater than or equal to a preset threshold. The preset threshold may vary according to a user's inputs. For example, the busy indicator may be implemented with a one-bit indicator, indicating '1' (represent 'busy') when a usage of memory is greater than or equal to a preset threshold, or '0' (represent 'idle') when a usage of memory is less than a preset threshold.

As shown in Fig. 15, a determination is made as to whether the busy indicator of the memory controller is '1 (busy)', or a usage of memory is greater than or equal to a preset threshold, in operation 1510. That is, a determination is made whether a cache memory needs to be dynamically allocated because a usage of memory is large.

When the busy indicator of the memory controller is '1 (busy)' in operation 1510, a determination is made whether all the free indicators of enabled IPs are '0 (full)', or an area, not in use, exists in the allocated cache memory, in operation 1520.

When all the memory of enabled IPs is in use in operation 1520, a determination is made whether there is an IP of which the free indicator is 1 (free), or that has a memory area which is allocated but not in use, from among the enabled IPs, in operation 1530.

When there is an IP that has a memory area which is allocated but not in use in operation 1530, the free IP with a memory area not in use is processed to change the use area in the actual memory of the free IP in order to exclude the memory area not is use and to change from the free IP in operation 1540.

After that, the full IP where all the allocated memory is in use is changed to include the memory area, not used in the free IP, in the actual memory use information in operation 1550.

Referring to Fig. 16, MFC and DMA from among the master IPs are set to a cache mode and each allocated cache memories. The busy indicator of the memory controller indicates 1 (busy) and the free indicator of the DMA indicates 0 (full). When the free indicator of the MFC indicates 1 (free), the actual memory actually used the DMA and MFC may be altered as shown in Fig. 16. That is, the actual memory use information may be altered so that: a memory area, not in use, from among the memory areas allocated to the MFC, reduces the memory area actually used by the MFC so that the DMA can use the memory area not in use; and the reduced area is added to a memory area actually used by the DMA.

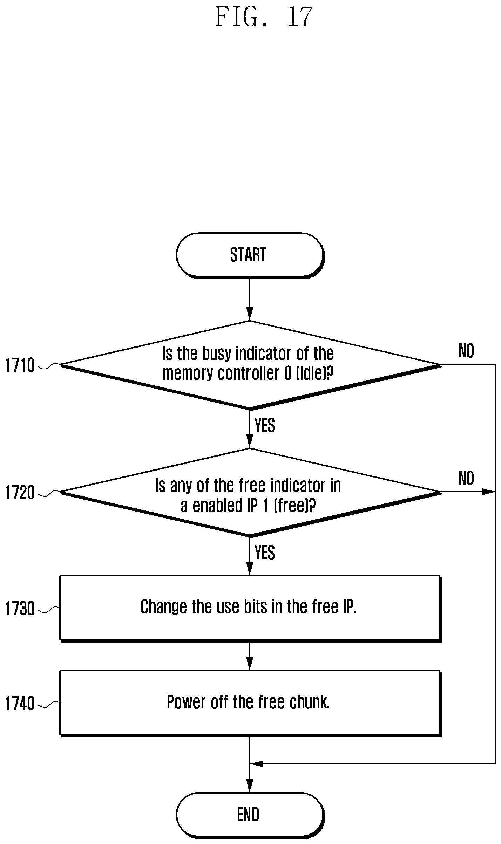

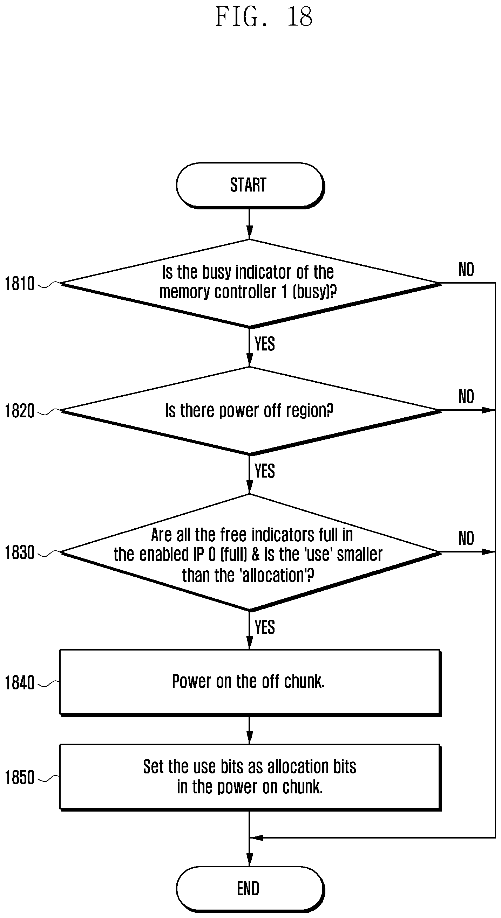

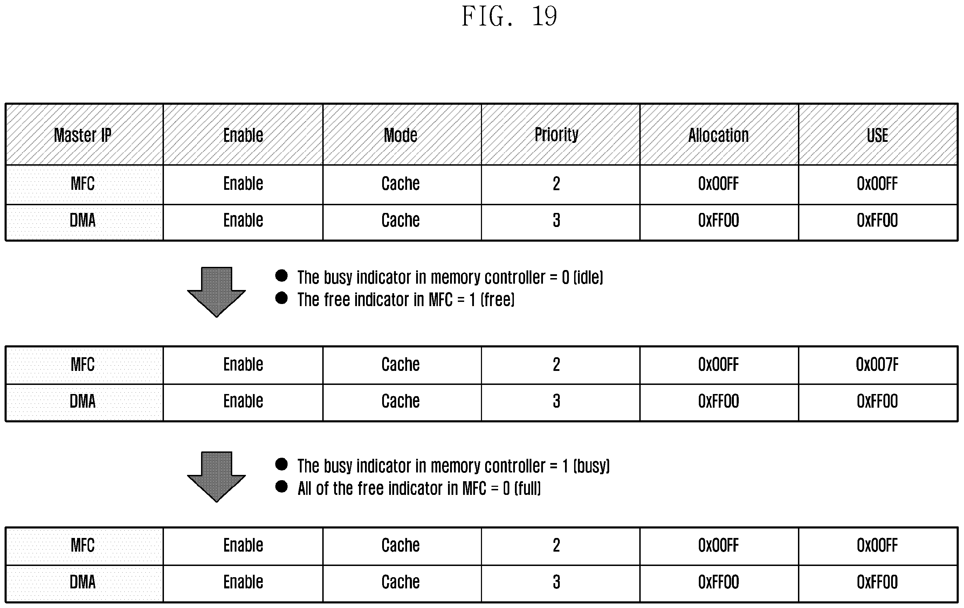

Figs. 17 and 18 are flow diagrams showing methods of controlling power according to chucks of a cache memory according to an embodiment of the present invention. Fig. 19 is a diagram showing power control information regarding a cache memory according to an embodiment of the present invention.

Referring to Figs. 17 and 18, in a switchable on-chip memory according to an embodiment of the present invention, power control of a cache memory may be performed in a unit of chunk. Power may be controlled in chunks, based on a free indicator according to a chunk of a cache memory and a busy indicator of a memory controller, described above.

Referring to Fig. 17, a method of powering off a chunk area not used in a memory is described. A determination is made whether the busy indicator of the memory controller is '0 (idle),' or a usage of memory is less than a preset threshold, in operation 1710.

When a usage of memory is less than a preset threshold in operation 1710, a determination is made whether there is an IP of which the free indicator is '1 (free)' in the enabled IPs, i.e., there is a memory area that is not in use in allocated cache memory, in operation 1720.

When there is a memory area that is not in use in allocated cache memory, in operation 1720, the IP may be set so that the memory area not in use can be excluded from the actual memory use information in operation 1730.

After that, the controller may power off the chunk area of the memory not in use in.

Referring to Fig. 18, a method of powering on a power-off chunk area in a memory is described. A determination is made whether the busy indicator of the memory controller is '1 (busy),' i.e., a usage of memory is greater than or equal to a preset threshold, in operation 1810.

When a usage of memory is greater than or equal to a preset threshold in operation 1810, a determination is made whether there is a power-off region in operation 1820.

When there is a power-off region in operation 1820, a determination is made whether all the free indicators of enabled IPs are '0 (full)', i.e., an area, not in use, exists in the allocated cache memory, and also whether there is an IP where the actually used memory area is smaller than the allocated area in operation 1830.

After that, the power-off chunk region is powered on in operation 1840. The power-on chunk is added to a use area and the actual memory use area is set to be identical to the memory allocation area in operation 1850.

Referring to Fig. 19, MFC and DMA from among the master IPs are set to a cache mode and each allocated cache memories. The busy indicator of the memory controller indicates 0 (idle) and the free indicator of the MFC indicates 1 (free). In this case, as shown in Fig. 19, the actual memory use information regarding the MFC is changed, and an area, not is use from among the changed areas, may be powered off. That is, the actual memory use information may be changed so that a memory area, not in use from among the memory areas allocated to the MFC, may be powered off.

After that, the busy indicator of the memory controller is 1 (busy) and the free indicator of the MFC is 0 (full). In this case, as shown in Fig. 19, the actual memory use information regarding the MFC is changed, and the changed area may be powered on. That is, since the memory area, not in use from among the memory areas allocated to the MFC, is powered off, the memory area allocated to the MFC may be set to differ from the actual use area. After that, when a memory area, allocated to the MFC but not in use, is powered on, the powered-on memory area may be included in the actual memory use area.

As described above, the on-chip memory according to an embodiment of the present invention is capable of: setting a memory area to a buffer or a cache according to use scenarios by master IPs; and dynamically allocating portions of the memory area. The on-chip memory is capable of allocating memory to master IPs according to a mode of a master IP (a buffer or cache mode), a priority, a required size of memory space, a correlation, etc.

The on-chip memory according to an embodiment of the present invention is capable of dynamically using the memory as a buffer or a cache, dividing the memory into chunks, and using the memory in a unit of chunk, thereby dynamically using one part of the memory as a buffer and the other part as a cache.

In addition, the embodiment can dynamically allocate cache memories to the master IPs in a cache mode and control the supply of power to the cache memories, thereby reducing the power consumption.

The embodiments of the present invention described in the description and drawings are merely provided to assist in a comprehensive understanding of the invention and are not suggestive of limitation. Although embodiments of the invention have been described in detail above, it should be understood that many variations and modifications of the basic inventive concept herein described.

Therefore, the detailed description should be analyzed not to be limited but to be exemplary. It should be understood that many variations and modifications of the basic inventive concept herein described, which may be apparent to those skilled in the art, will still fall within the scope of the embodiments of the invention as defined in the appended claims.

**Claims**

1. A memory control method of an on-chip memory (450) of a processor (400), comprising at least one master intellectual property (IP) (411) and at least one on-chip memory, comprising:

   determining a mode of memory for the at least one master IP as a buffer or a cache based on a memory access region for the at least one master IP;
   setting memory allocation information including at least one of a priority for the at least one master IP, a required size of memory space, and a correlation with other master IP; and
   allocating memories to the at least one master IP based on the determined mode of the memory for the at least one master IP and the memory allocation information.

2. The memory control method of claim 1, wherein determining a mode of the memory for the at least one master IP comprises:

   determining whether locality of a master IP exists;
   determining, when the locality of the master IP exists, whether the access region for the master IP is less than the memory area of the on-chip memory;
   setting the mode of the memory for the at least one master IP to a buffer, when the access region is less than the memory area of the on-chip memory; and
   setting the mode of the memory for the at least one master IP to a cache, when the access region is greater than the memory area of the on-chip memory.

3. The memory control method of claim 1, wherein setting memory allocation information comprises:

   setting, when a master IP is a real-time IP, the master IP to have a high priority.

4. The memory control method of claim 1, wherein setting memory allocation information comprises:

   when the mode of the memory for the at least one master IP is determined as the buffer, setting a required size of memory space according to the access region size; and
   when the mode of the memory for the at least one master IP is determined as the cache, setting a spot where a hit ratio is identical to a preset threshold as a required size of memory space.

5. The memory control method of claim 1, wherein setting memory allocation information comprises:
   when a ratio of a time that two master IPs simultaneously operate to a time that one of the master IPs operates is greater than or equal to a preset threshold, setting the correlation between the master IPs to be high.

6. The memory control method of claim 1, wherein allocating memories to each master IP comprises:

   selecting a master IP with the highest priority;
   determining whether the correlation between the selected master IP and an master IP that has been selected before the selected master IP is high; and
   allocating memories to the master IPs according to a required size of memory space, when the correlation between the selected master IP and an master IP that has been selected before the selected master IP is not high.

7. The memory control method of claim 6, wherein allocating memories to each master IP comprises:

   when the correlation between the selected master IP and an master IP that has been selected before the selected master IP is high, determining whether the summation of a memory space size, required by the selected master IP, and memory space sizes, allocated to the master IPs selected previously before the selected master IP, is greater than the memory area size of the on-chip memory;
   when the summation of a memory space size is less than the memory area size of the on-chip memory, allocating memories to the master IPs according to the required memory space size; when the summation of a memory space size is greater than the memory area size of the on-chip memory, allocating memories to the master IPs according to a size produced by subtracting the memory space size from the memory area size of the on-chip memory, and

wherein the memory allocation is performed in a unit of chunk.

8. A processor (400), comprising at least one master intellectual property (IP) (411) and an on-chip memory (450), wherein the on-chip memory comprising:

a memory space; and
a controller (430) configured to determine a mode of memory for the at least one master IP as a buffer or a cache based on a memory access region for the at least one master IP, to set memory allocation information including at least one of, a priority of the at least one master IP, a required size of memory space, and a correlation with other master IP; and to allocate memories to the at least one master IP based on the determined mode of the memory for the at least one master IP and the memory allocation information.

9. The processor of claim 8, wherein the controller: determine whether the locality of a master IP exists; determines, when the locality of the master IP exists, whether the access region is less than the memory area of the on-chip memory; sets the mode of the memory for the at least one master IP to the buffer, when the access region is less than the memory area of the on-chip memory; and sets the mode of the memory for the at least one master IP to the cache, when the access region is greater than the memory area of the on-chip memory.

10. The processor of claim 8, wherein the controller sets, when a master IP is a real-time IP, the master IP to have a high priority.

11. The processor of claim 8, wherein the controller: sets, when the mode of the memory for the at least one master IP is the buffer, a required size of memory space according to the access region size; and sets, when the mode of the memory for the at least one master IP is the cache, a spot where a hit ratio is identical to a preset threshold as a required size of memory space.

12. The processor of claim 8, wherein, when a ratio of a time that two master IPs simultaneously operate to a time that one of the master IPs operates is greater than or equal to a preset threshold, the controller sets the correlation between the master IPs to be high.

13. The processor of claim 8, wherein the controller: selects a master IP with the highest priority; determines whether the correlation between the selected master IP and an master IP that has been selected before the selected master IP is high; and allocates memories to the master IPs according to a required size of memory space, when the correlation between the selected master IP and an master IP that has been selected before the selected master IP is not high,
wherein:
when the correlation between the selected master IP and an master IP that has been selected before the selected master IP is high, the controller determines whether the summation of a memory space size, required by the selected master IP, and memory space sizes, allocated to the master IPs selected previously before the selected master IP, is greater than the memory area size of the on-chip memory; when the summation of a memory space size is less than the memory area size of the on-chip memory, the controller allocates memories to the master IPs according to the required memory space size; and when the summation of a memory space size is greater than the memory area size of the on-chip memory, the controller allocates memories to the master IPs according to a size produced by subtracting the memory space size from the memory area size of the on-chip memory.

**Patentansprüche**

1. Speichersteuerungsverfahren eines On-Chip-Speichers (450) eines Prozessors (400), der wenigstens einen Master-Intellectual-Property-Core (IP) (411) und wenigstens einen On-Chip-Speicher umfasst, umfassend:

Bestimmen eines Speichermodus für den wenigstens einen Master-IP als einen Puffer oder einen Cache basierend auf einem Speicherzugriffsbereich für den wenigstens einen Master-IP;
Einstellen von Speicherzuweisungsinformationen, die wenigstens eines aus einer Priorität für den wenigstens einen Master-IP, einer benötigten Speicherplatzgröße und einer Korrelation mit einem anderen Master-IP beinhalten; und
Zuweisen von Speichern zu dem wenigstens einen Master-IP basierend auf dem bestimmten Modus des Speichers für den wenigstens einen Master-IP und den Speicherzuweisungsinformationen.

**2.** Speichersteuerungsverfahren nach Anspruch 1, wobei das Bestimmen eines Modus des Speichers für den wenigstens einen Master-IP umfasst:

Bestimmen, ob eine Lokalität eines Master-IP existiert;
Bestimmen, wenn die Lokalität des Master-IP existiert, ob der Zugriffsbereich für den Master-IP kleiner ist als der Speicherbereich des On-Chip-Speichers;
Einstellen des Modus des Speichers für den wenigstens einen Master-IP auf einen Puffer, wenn der Zugriffsbereich kleiner ist als der Speicherbereich des On-Chip-Speichers; und
Einstellen des Modus des Speichers für den wenigstens einen Master-IP auf einen Cache, wenn der Zugriffsbereich größer ist als der Speicherbereich des On-Chip-Speichers.

**3.** Speichersteuerungsverfahren nach Anspruch 1, wobei das Einstellen von Speicherzuweisungsinformationen umfasst:
Einstellen, wenn ein Master-IP ein Echtzeit-IP ist, des Master-IP darauf, eine hohe Priorität aufzuweisen.

**4.** Speichersteuerungsverfahren nach Anspruch 1, wobei das Einstellen von Speicherzuweisungsinformationen umfasst:

wenn der Modus des Speichers für den wenigstens einen Master-IP als der Puffer bestimmt ist, Einstellen einer benötigten Speicherplatzgröße gemäß der Zugriffsbereichsgröße; und
wenn der Modus des Speichers für den wenigstens einen Master-IP als der Cache bestimmt ist, Einstellen eines Punktes, wo eine Trefferquote einem voreingestellten Schwellenwert entspricht, als eine benötigte Speicherplatzgröße.

**5.** Speichersteuerungsverfahren nach Anspruch 1, wobei das Einstellen von Speicherzuweisungsinformationen umfasst:
wenn ein Verhältnis einer Zeit, die zwei Master-IPs gleichzeitig arbeiten, zu einer Zeit, die einer der Master-IPs arbeitet, größer als oder gleich ein(em) voreingestellter/n Schwellenwert ist, Einstellen der Korrelation zwischen den Master-IPs auf hoch.

**6.** Speichersteuerungsverfahren nach Anspruch 1, wobei das Zuweisen von Speichern zu jedem Master-IP umfasst:

Auswählen eines Master-IP mit der höchsten Priorität;
Bestimmen, ob die Korrelation zwischen dem ausgewählten Master-IP und einem Master-IP, der vor dem ausgewählten Master-IP ausgewählt wurde, hoch ist; und
Zuweisen von Speichern zu den Master-IPs gemäß einer benötigten Speicherplatzgröße, wenn die Korrelation zwischen dem ausgewählten Master-IP und einem Master-IP, der vor dem ausgewählten Master-IP ausgewählt wurde, nicht hoch ist.

**7.** Speichersteuerungsverfahren nach Anspruch 6, wobei das Zuweisen von Speichern zu jedem Master-IP umfasst:

wenn die Korrelation zwischen dem ausgewählten Master-IP und einem Master-IP, der vor dem ausgewählten Master-IP ausgewählt wurde, hoch ist, Bestimmen, ob die Summierung einer Speicherplatzgröße, die von dem ausgewählten Master-IP benötigt wird, und von Speicherplatzgrößen, die den Master-IPs, die zuvor vor dem ausgewählten Master-IP ausgewählt wurden, zugewiesen sind, größer ist als die Speicherbereichsgröße des On-Chip-Speichers;
wenn die Summierung einer Speicherplatzgröße kleiner ist als die Speicherbereichsgröße des On-Chip-Speichers, Zuweisen von Speichern zu den Master-IPs gemäß der benötigten Speicherplatzgröße;
wenn die Summierung einer Speicherplatzgröße größer ist als die Speicherbereichsgröße des On-Chip-Speichers, Zuweisen von Speichern zu den Master-IPs gemäß einer Größe, die durch Subtrahieren der Speicherplatzgröße von der Speicherbereichsgröße des On-Chip-Speichers erhalten wird, und
wobei die Speicherzuweisung in einer Chunk-Einheit erfolgt.

**8.** Prozessor (400), der wenigstens einen Master-Intellectual-Property-Core (IP) (411) und einen On-Chip-Speicher (450) umfasst, wobei der On-Chip-Speicher umfasst:

einen Speicherplatz; und
eine Steuerung (430), die dazu ausgestaltet ist, basierend auf einem Speicherzugriffsbereich für den wenigstens einen Master-IP einen Speichermodus für den wenigstens einen Master-IP als einen Puffer oder einen Cache zu bestimmen, Speicherzuweisungsinformationen, die wenigstens eines aus einer Priorität des wenigstens einen Master-IP, einer benötigten Speicherplatzgröße und einer Korrelation mit einem anderen Master-IP beinhalten, einzustellen; und basierend auf dem bestimmten Modus des Speichers für den wenigstens einen Master-IP und den Speicherzuweisungsinformationen dem wenigstens einen Master-IP Speicher zuzuweisen.

9. Prozessor nach Anspruch 8, wobei die Steuerung: bestimmt, ob die Lokalität eines Master-IP existiert; bestimmt, wenn die Lokalität des Master-IP existiert, ob der Zugriffsbereich kleiner ist als der Speicherbereich des On-Chip-Speichers; den Modus des Speichers für den wenigstens einen Master-IP auf den Puffer einstellt, wenn der Zugriffsbereich kleiner ist als der Speicherbereich des On-Chip-Speichers; und den Modus des Speichers für den wenigstens einen Master-IP auf den Cache einstellt, wenn der Zugriffsbereich größer ist als der Speicherbereich des On-Chip-Speichers.

10. Prozessor nach Anspruch 8, wobei die Steuerung, wenn ein Master-IP ein Echtzeit-IP ist, den Master-IP darauf einstellt, eine hohe Priorität aufzuweisen.

11. Prozessor nach Anspruch 8, wobei die Steuerung, wenn der Modus des Speichers für den wenigstens einen Master-IP der Puffer ist, eine benötigte Speicherplatzgröße gemäß der Zugriffsbereichsgröße einstellt; und, wenn der Modus des Speichers für den wenigstens einen Master-IP der Cache ist, einen Punkt, wo eine Trefferquote einem voreingestellten Schwellenwert entspricht, als eine benötigte Speicherplatzgröße einstellt.

12. Prozessor nach Anspruch 8, wobei, wenn ein Verhältnis einer Zeit, die zwei Master-IPs gleichzeitig arbeiten, zu einer Zeit, die einer der Master-IPs arbeitet, größer als oder gleich ein(em) voreingestellter/n Schwellenwert ist, die Steuerung die Korrelation zwischen den Master-IPs auf hoch einstellt.

13. Prozessor nach Anspruch 8, wobei die Steuerung: einen Master-IP mit der höchsten Priorität auswählt; bestimmt, ob die Korrelation zwischen dem ausgewählten Master-IP und einem Master-IP, der vor dem ausgewählten Master-IP ausgewählt wurde, hoch ist; und den Master-IPs gemäß einer benötigten Speicherplatzgröße Speicher zuweist, wenn die Korrelation zwischen dem ausgewählten Master-IP und einem Master-IP, der vor dem ausgewählten Master-IP ausgewählt wurde, nicht hoch ist,
wobei:
wenn die Korrelation zwischen dem ausgewählten Master-IP und einem Master-IP, der vor dem ausgewählten Master-IP ausgewählt wurde, hoch ist, die Steuerung bestimmt, ob die Summierung einer Speicherplatzgröße, die von dem ausgewählten Master-IP benötigt wird, und von Speicherplatzgrößen, die den Master-IPs, die zuvor vor dem ausgewählten Master-IP ausgewählt wurden, zugewiesen sind, größer ist als die Speicherbereichsgröße des On-Chip-Speichers; wenn die Summierung einer Speicherplatzgröße kleiner ist als die Speicherbereichsgröße des On-Chip-Speichers, die Steuerung den Master-IPs gemäß der benötigten Speicherplatzgröße Speicher zuweist; und, wenn die Summierung einer Speicherplatzgröße größer ist als die Speicherbereichsgröße des On-Chip-Speichers, die Steuerung den Master-IPs gemäß einer Größe, die durch Subtrahieren der Speicherplatzgröße von der Speicherbereichsgröße des On-Chip-Speichers erhalten wird, Speicher zuweist.

**Revendications**

1. Procédé de commande d'une mémoire sur puce (450) d'un processeur (400), comprenant au moins une propriété intellectuelle (IP) maître (411) et au moins une mémoire sur puce, comprenant :

la détermination d'un mode de mémoire pour ladite au moins une IP maître en tant que tampon ou cache sur la base d'une zone d'accès à la mémoire pour ladite au moins une IP maître ;
le paramétrage d'informations d'attribution de mémoire comprenant une priorité pour ladite au moins une IP maître et/ou une taille exigée pour un espace de mémoire et/ou une corrélation avec une autre IP maître ; et
l'attribution de mémoires à ladite au moins une IP maître sur la base du mode de mémoire déterminé pour ladite au moins une IP maître et des informations d'attribution de mémoire.

2. Procédé de commande de mémoire selon la revendication 1, où la détermination d'un mode de mémoire pour ladite au moins une IP maître comprend :

la détermination si une localisation d'une IP maître est présentée ;

la détermination, si la localisation de l'IP maître est présentée, si la zone d'accès pour l'IP maître est inférieure à la zone de mémoire de la mémoire sur puce ;

le paramétrage comme tampon du mode de mémoire pour ladite au moins une IP maître, si la zone d'accès est inférieure à la zone de mémoire de la mémoire sur puce ; et le paramétrage comme cache du mode de mémoire pour ladite au moins une IP maître, si la zone d'accès est supérieure à la zone de mémoire de la mémoire sur puce.

3. Procédé de commande de mémoire selon la revendication 1, où le paramétrage d'informations d'attribution de mémoire comprend :

le paramétrage, si une IP maître est une IP en temps réel, de ladite IP maître comme ayant une priorité élevée.

4. Procédé de commande de mémoire selon la revendication 1, où le paramétrage d'informations d'attribution de mémoire comprend :

si le mode de mémoire pour ladite au moins une IP maître est déterminé comme tampon, le paramétrage d'une taille exigée d'espace de mémoire en fonction de la taille de la zone d'accès ; et

si le mode de mémoire pour ladite au moins une IP maître est déterminé comme cache, le paramétrage comme taille d'espace de mémoire exigée d'un emplacement où un taux de réussite est identique à un seuil défini.

5. Procédé de commande de mémoire selon la revendication 1, où le paramétrage d'informations d'attribution de mémoire comprend

si un rapport entre un temps où deux IP maîtres fonctionnent simultanément, et un temps où seule une des IP maîtres fonctionne, est supérieur ou égal à un seuil défini, le paramétrage d'une corrélation forte entre IP maîtres.

6. Procédé de commande de mémoire selon la revendication 1, où l'attribution de mémoires à chaque IP maître comprend :

la sélection d'une IP maître à priorité maximale ;

la détermination si la corrélation entre l'IP maître sélectionnée et une IP maître sélectionnée antérieurement à l'IP maître sélectionnée est forte ; et

l'attribution de mémoires aux IP maîtres en fonction d'une taille d'espace de mémoire exigée, si la corrélation entre l'IP maître sélectionnée et une IP maître sélectionnée antérieurement à l'IP maître sélectionnée n'est pas forte.

7. Procédé de commande de mémoire selon la revendication 6, où l'attribution de mémoires à chaque IP maître comprend :

si la corrélation entre l'IP maître sélectionnée et une IP maître sélectionnée antérieurement à l'IP maître sélectionnée est forte, la détermination si la somme d'une taille d'espace de mémoire, exigée par l'IP maître sélectionnée, et des tailles d'espaces de mémoire attribués aux IP maîtres sélectionnées antérieurement à l'IP maître sélectionnée, est supérieure à la taille de zone de mémoire de la mémoire sur puce ;

si la somme d'une taille d'espace de mémoire est inférieure à la taille de zone de mémoire de la mémoire sur puce, l'attribution de mémoires aux IP maîtres en fonction de la taille d'espace de mémoire exigée ;

si la somme d'une taille d'espace de mémoire est supérieure à la taille de zone de mémoire de la mémoire sur puce, l'attribution de mémoires aux IP maîtres en fonction d'une taille obtenue par soustraction de la taille d'espace de mémoire de la taille de zone de mémoire de la mémoire sur puce, et

où l'attribution de mémoire est effectuée dans une unité de bloc.

8. Processeur (400), comprenant au moins une propriété intellectuelle maître (IP) (411) et une mémoire sur puce (450), où la mémoire sur puce comprend :

un espace de mémoire ; et

un contrôleur (430) prévu pour déterminer un mode de mémoire pour ladite au moins une IP maître en tant que tampon ou cache sur la base d'une zone d'accès à la mémoire pour ladite au moins une IP maître, pour paramétrer des informations d'attribution de mémoire comprenant une priorité pour ladite au moins une IP maître et/ou une taille exigée pour un espace de mémoire et/ou une corrélation avec une autre IP maître ; et pour attribuer des mémoires à ladite au moins une IP maître sur la base du mode de mémoire déterminé pour ladite au moins une IP maître et des informations d'attribution de mémoire.

9. Processeur selon la revendication 8, où le contrôleur : détermine si la localisation d'une IP maître est présentée ; détermine, si la localisation de l'IP maître est présentée, si la zone d'accès est inférieure à la zone de mémoire de la mémoire sur puce ; paramètre comme tampon le mode de mémoire pour ladite au moins une IP maître, si la zone d'accès est inférieure à la zone de mémoire de la mémoire sur puce ; et paramètre comme cache le mode de mémoire pour ladite au moins une IP maître, si la zone d'accès est supérieure à la zone de mémoire de la mémoire sur puce.

10. Processeur selon la revendication 8, où, si une IP maître est une IP en temps réel, le contrôleur paramètre l'IP maître comme ayant une priorité élevée.

11. Processeur selon la revendication 8, où le contrôleur : paramètre une taille d'espace de mémoire exigée en fonction de la taille de la zone d'accès, si le mode de mémoire pour ladite au moins une IP maître est le tampon ; et paramètre comme taille d'espace de mémoire exigée un emplacement où un taux de réussite est identique à un seuil défini, si le mode de mémoire pour ladite au moins une IP maître est le cache.

12. Processeur selon la revendication 8, où, si un rapport entre un temps où deux IP maîtres fonctionnent simultanément, et un temps où seule une des IP maîtres fonctionne, est supérieur ou égal à un seuil défini, le contrôleur paramètre une corrélation forte entre IP maîtres.

13. Processeur selon la revendication 8, où le contrôleur : sélectionne une IP maître à priorité maximale ; détermine si la corrélation entre l'IP maître sélectionnée et une IP maître sélectionnée antérieurement à l'IP maître sélectionnée est forte ; et attribué des mémoires aux IP maîtres en fonction d'une taille d'espace de mémoire exigée, si la corrélation entre l'IP maître sélectionnée et une IP maître sélectionnée antérieurement à l'IP maître sélectionnée n'est pas forte,

où :
si la corrélation entre l'IP maître sélectionnée et une IP maître sélectionnée antérieurement à l'IP maître sélectionnée est forte, le contrôleur détermine si la somme d'une taille d'espace de mémoire, exigée par l'IP maître sélectionnée, et des tailles d'espaces de mémoire attribués aux IP maîtres sélectionnées antérieurement à l'IP maître sélectionnée, est supérieure à la taille de zone de mémoire de la mémoire sur puce ; si la somme d'une taille d'espace de mémoire est inférieure à la taille de zone de mémoire de la mémoire sur puce, le contrôleur attribue des mémoires aux IP maîtres en fonction de la taille d'espace de mémoire exigées ; et si la somme d'une taille d'espace de mémoire est supérieure à la taille de zone de mémoire de la mémoire sur puce, le contrôleur attribue des mémoires aux IP maîtres en fonction d'une taille obtenue par soustraction de la taille d'espace de mémoire de la taille de zone de mémoire de la mémoire sur puce.

# FIG. 1

FIG. 2

# FIG. 3

On Chip Buffer

1 cycle

CPU

SRAM
(onchip)

0

P-1

P

Data
Cache

Data
(offchip)

1 cycle

10-20
1 cycle

N-1

Memory
Address
Space

On Chip Cache

FIG. 4

EP 3 029 580 B1

# FIG. 5

(a)

(b)

# FIG. 6

```
                    ┌─────────────┐
                    │    START    │
                    └──────┬──────┘
                           │        ╭── 610
                           ▼
        NO         ◇ DETERMINE WHETHER ◇
    ┌──────────────   LOCALITY EXISTS?
    │              ◇                   ◇
    │                     │ YES
    │                     ▼        ╭── 620
    │              ◇  Access Region >  ◇      NO
    │              ◇   Memory Size?    ◇──────────┐
    │              ◇                   ◇          │
    │                     │ YES  ╭── 630          │  ╭── 640
    │                     ▼                       ▼
    │        ┌────────────────────┐   ┌────────────────────┐
    │        │   Mode = Cache     │   │   Mode = Buffer    │
    │        └─────────┬──────────┘   └─────────┬──────────┘
    │                  │                        │
    └──────────────────┼────────────────────────┘
                       ▼
                ┌─────────────┐
                │     END     │
                └─────────────┘
```

FIG. 7

EP 3 029 580 B1

# FIG. 8

Time

OPERATION POINT OF
IP1

OPERATION POINT OF
IP2

A

B

# FIG. 9

```
                          START

                            ↓
         ┌──────────────────────────────────────┐
    ┌───→│     SET PRIORITY VALUE I = ZERO       │───910
    │    └──────────────────────────────────────┘
    │                       ↓
    │    ┌──────────────────────────────────────┐
    │    │     SELECT MASTER IP OF A PRIORITY, I │───920
    │    └──────────────────────────────────────┘
    │                       ↓
    │              930                          940
    │        ╱╲                           ╱╲
    │       ╱  ╲        DETERMINE        ╱  ╲      MEMORY SIZE >
    │      ╱    ╲  WHETHER A CORRELATION ╱    ╲  SUMMATION OF A SIZE OF PREVIOUSLY
    │     ╱      ╲ BETWEEN A SELECTED IP  NO   ╲ ALLOCATED MEMORY AND A SIZE OF MEMORY   NO
    │      ╲ AND PREVIOUSLY ALLOCATED───→╱      ╱ REQUIRED BY A SELECTED IP ───────────┐
    │       ╲    IPS IS LOW    ╱        ╲      ╱                                        │
    │        ╲  ╱               ╲        ╲    ╱                                         │
    │         ╲╱   YES           ╲        ╲  ╱  YES                                     ↓
    │          ↓                  ←────────╲╱←──────────┐                    960
    │    ┌──────────────────────────────────┐           │    ┌────────────────────────────────────┐
    │    │ ALLOCATE A MEMORY SIZE REQUIRED   │───950     │    │     ALLOCATE MEMORY SPACE           │
    │    │ BY A SELECTED IP [UNIT = MEMORY    │          │    │ [=MEMORY SIZE - SUMMATION OF        │
    │    │ CHUNK]                             │          │    │ PREVIOUSLY ALLOCATED MEMORY SIZES]  │
    │    └──────────────────────────────────┘           │    │ TO SELECTED IP                      │
    │                       ↓                            │    └────────────────────────────────────┘
    │           980         ↓←───────────────────────────────────────┘
    │    ┌──────────────────┐  NO      ╱╲
    └────│ INCREASE PRIORITY │←────────╱  ╲
         │    VALUE I        │        ╱    ╲  ALL of the IPs are allocated?   ───970
         └──────────────────┘         ╲    ╱
                                        ╲  ╱
                                         ╲╱
                                          ↓ YES

                                         END
```

EP 3 029 580 B1

FIG. 10

1000

| 1010 | SFR | Transaction Decoder | 1020 |
| 1040 | Cache Allocator | Buffer/Cache Selector | 1030 |
| 1050 | Buffer Controller | Cache Controller | 1060 |

Memory

1070

FIG. 11

| ID | Enable | Mode | Priority | Allocation | Use |
|----|--------|------|----------|------------|-----|
| ... | | | | | |
| ... | | | | | |

FIG. 12

1255

| [0] | [1] | [2] | [3] | [4~14] | [15] |
|-----|-----|-----|-----|--------|------|
| 1   | 1   | 0   | 0   | ...    | 0    |

# FIG. 13

```
                    ┌─────────────┐
                    │    START    │
                    └─────────────┘
                           │
                           ▼
        ┌────────────────────────────────────┐
        │      (IP transaction) Disable       │────── 1310
        └────────────────────────────────────┘
                           │
                           ▼
        ┌────────────────────────────────────┐
        │     (On chip memory SFR) IP disable │────── 1320
        └────────────────────────────────────┘
                           │
                           ▼
        ┌────────────────────────────────────┐
        │        (On chip memory SFR)         │
        │ SET MODE, PRIORITY, ALLOCATION, AND USE │── 1330
        └────────────────────────────────────┘
                           │
                           ▼
        ┌────────────────────────────────────┐
        │     (On chip memory SFR) IP enable  │────── 1340
        └────────────────────────────────────┘
                           │
                           ▼
        ┌────────────────────────────────────┐
        │       (IP transaction) Enable       │────── 1350
        └────────────────────────────────────┘
                           │
                           ▼
        ┌────────────────────────────────────┐
        │             IP running              │────── 1360
        └────────────────────────────────────┘
                           │
                           ▼
                    ┌─────────────┐
                    │     END     │
                    └─────────────┘
```

# FIG. 14

START

Is the IP transaction enabled? — 1410
NO / YES

Is the IP enabled in the SFR? — 1420
NO / YES

Is the mode buffer? — 1440
YES / NO

1430
Send this transaction
to the memory controller. (bypass)

1450
Send this transaction
to the buffer controller.

1460
Send this transaction
to the cache controller.

END

EP 3 029 580 B1

# FIG. 15

```
                    ┌─────────────┐
                    │    START    │
                    └──────┬──────┘
                           │
                           ▼
                    ╱─────────────╲
1510          ╱─────────────────────────╲        NO
         ╱  Is the busy indicator of the  ╲──────────┐
         ╲   memory controller 1 (busy)?  ╱          │
          ╲─────────────────────────────╱            │
                        │ YES                         │
                        ▼                             │
                    ╱─────────────╲                   │
1520          ╱─────────────────────────╲    NO       │
         ╱   Are all of the free indicators ╲─────────┤
         ╲    in a enabled IP 0 (full)?   ╱           │
          ╲─────────────────────────────╱             │
                        │ YES                          │
                        ▼                              │
                    ╱─────────────╲                    │
1530          ╱─────────────────────────╲   NO         │
         ╱   Is any of the free indicator in ╲─────────┤
         ╲    a enabled IP 1 (free)?     ╱             │
          ╲─────────────────────────────╱             │
                        │ YES                          │
                        ▼                              │
        ┌──────────────────────────────┐              │
1540    │  Change the use bits in the free IP.         │
        └───────────────┬──────────────┘              │
                        ▼                              │
        ┌──────────────────────────────┐              │
1550    │  Change the use bits in the full IP.         │
        └───────────────┬──────────────┘              │
                        │◄────────────────────────────┘
                        ▼
                 ┌─────────────┐
                 │     END     │
                 └─────────────┘
```

FIG. 16

| Master IP | Enable | Mode | Priority | Allocation | USE |
|-----------|--------|-------|----------|------------|--------|
| MFC | Enable | Cache | 2 | 0x00FF | 0x00FF |
| DMA | Enable | Cache | 3 | 0xFF00 | 0xFF00 |

● The busy indicator in memory controller = 1 (busy)
● All of free indicators in DMA =0 (full)
● The free indicator in MFC = 1 (free)

| MFC | Enable | Cache | 2 | 0x00FF | 0x007F |
|-----|--------|-------|---|--------|--------|
| DMA | Enable | Cache | 3 | 0xFF00 | 0xFF80 |

EP 3 029 580 B1

# FIG. 17

START

1710 — Is the busy indicator of the memory controller 0 (Idle)? — NO

YES

1720 — Is any of the free indicator in a enabled IP 1 (free)? — NO

YES

1730 — Change the use bits in the free IP.

1740 — Power off the free chunk.

END

# FIG. 18

```
                    ┌─────────────┐
                    │    START    │
                    └──────┬──────┘
                           │
                           ▼
        ╱─────────────────────────────────────╲        NO
1810   ╱   Is the busy indicator of the         ╲──────────┐
       ╲   memory controller 1 (busy)?          ╱          │
        ╲─────────────────────────────────────╱           │
                       │ YES                                │
                       ▼                                    │
        ╱─────────────────────────────────────╲        NO  │
1820   ╱      Is there power off region?        ╲──────────┤
       ╲                                         ╱          │
        ╲─────────────────────────────────────╱           │
                       │ YES                                │
                       ▼                                    │
        ╱─────────────────────────────────────╲            │
       ╱   Are all the free indicators full in  ╲     NO    │
1830  ╱  the enabled IP 0 (full) & is the 'use'  ╲─────────┤
      ╲    smaller than the 'allocation'?        ╱          │
        ╲─────────────────────────────────────╱            │
                       │ YES                                │
                       ▼                                    │
        ┌─────────────────────────────────────┐            │
1840    │         Power on the off chunk.      │            │
        └──────────────────┬──────────────────┘            │
                           ▼                                │
        ┌─────────────────────────────────────┐            │
1850    │     Set the use bits as allocation bits │         │
        │        in the power on chunk.        │            │
        └──────────────────┬──────────────────┘            │
                           ▼                                │
                           ◄────────────────────────────────┘
                    ┌─────────────┐
                    │     END     │
                    └─────────────┘
```

## FIG. 19

| Master IP | Enable | Mode | Priority | Allocation | USE |
|-----------|--------|------|----------|------------|-----|
| MFC | Enable | Cache | 2 | 0x00FF | 0x00FF |
| DMA | Enable | Cache | 3 | 0xFF00 | 0xFF00 |

- The busy indicator in memory controller = 0 (idle)
- The free indicator in MFC = 1 (free)

| Master IP | Enable | Mode | Priority | Allocation | USE |
|-----------|--------|------|----------|------------|-----|
| MFC | Enable | Cache | 2 | 0x00FF | 0x007F |
| DMA | Enable | Cache | 3 | 0xFF00 | 0xFF00 |

- The busy indicator in memory controller = 1 (busy)
- All of the free indicator in MFC = 0 (full)

| Master IP | Enable | Mode | Priority | Allocation | USE |
|-----------|--------|------|----------|------------|-----|
| MFC | Enable | Cache | 2 | 0x00FF | 0x00FF |
| DMA | Enable | Cache | 3 | 0xFF00 | 0xFF00 |

EP 3 029 580 B1

**EP 3 029 580 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110010519 A1